# EUROPEAN PATENT APPLICATION

(11) **EP 1 172 585 A2**
(43) Date of publication of application: **16.01.2002**
(21) Application number: 01305674.2
(22) Date of filing: 29.06.2001
(51) Int. Cl.: F16H 61/02

(54) **Vehicle control device**

(30) Priority: 29.06.2000 JP 2000195426
(71) Applicant: Jatco TransTechnology Ltd., Fuji-shi, Shizuoka 417-0023 (JP)
(72) Inventor: Noguchi, Yukihiro, c/o Jatco TransTechnology Ltd., Fuji-shi, Shizuoka, 417-0023 (JP); Doihara, Katsumi, c/o Jatco TransTechnology Ltd., Fuji-shi, Shizuoka, 417-0023 (JP)
(74) Representative: Abbie, Andrew Kenneth

(57) **Abstract**

A vehicle control device comprises: a microphone (3) for inputting a driver's control command; a voice recognition unit for recognizing a voice signal of the control command inputted by the microphone; a display unit (5) for displaying the control command recognized by the voice recognition unit; a control permission unit (4) for permitting the control command to be outputted in response to a permitting action taken by the driver who confirms that what is displayed on the display unit conforms to the control command intended by the driver; and an onboard control system for performing a controlling operation according to the control command outputted from the voice recognition unit by permission of said control permission unit. Since the onboard control system is controlled by the voice signal, the necessity of removing the hand from the steering wheel is eliminated.

## Description

### BACKGROUND OF THE INVENTION

### Field of the Invention

The present invention relates generally to a vehicle control device that controls onboard equipment. More particularly, the present invention relates to a shift control device of an automatic transmission, which is controlled by driver's voices.

### Description of the Prior Art

Japanese Patent Application Laid-open Publication No. 8-178000 discloses an example of conventional shift control devices of automatic transmissions. The shift control device disclosed in this publication has an automatic shift mode wherein a gear ratio of a continuously variable transmission is controlled to be a target gear ratio determined according to an operating state, and a manual mode which is set by shifting a shift lever to positions adjacent a D range, etc. and controls a gear ratio to a manually-set target gear ratio. The manual mode enables the shift to a gear ratio designated by the driver.

According to the above prior art, however, when changing gear positions manually, a driver must remove his or her hand from a steering wheel and shift a shift lever to the manual mode. Thus, the driver has to move the shift lever forward and backward with a large stroke of the hand. Particularly if the steering wheel must be turned or the like frequently as in the case of sport driving, it is desirable to keep hands on the steering wheel as much as possible.

The above problem is also encountered in a case where vehicle equipments such as an air conditioner temperature control device, a wiper and a headlight, which are operated by temporarily removing the hand from the steering wheel, are controlled.

### SUMMARY OF THE INVENTION

It is therefore an object of the present invention to provide a vehicle control device that enables a driver to control an onboard system without removing the hand from a steering wheel.

To attain the above object, the present invention provides a vehicle control device comprising: a microphone for inputting a driver's control voice command; a voice recognition unit for recognizing a voice signal of the control command inputted by the microphone; a display unit for displaying the control command recognized by the voice recognition unit at such a position as to be seen by the driver; a control permission unit for permitting the control command to be outputted in response to a permitting action taken by the driver who confirms that what is displayed on the display unit conforms to the control command intended by the driver; and an onboard control system for performing a controlling operation according to the control command outputted from the voice recognition unit by permission of the control permission unit.

According to the invention, the microphone inputs the driver's control command as a voice signal, and the voice recognition unit recognizes the voice signal inputted by said microphone. The display unit then displays the control command recognized by the voice recognition unit. The control permission unit permits the control command to be outputted in response to a permitting action taken by the driver who confirms that what is displayed on the display unit conforms to the intended control command. The onboard control system performs a controlling operation according to the control command outputted by permission.

Thus, the onboard control system, which has been conventionally operated and controlled by using the hand, is controlled by the voice signal.

This enables safety driving.

Moreover, one control permission device enables multiple operations and controls, and this makes the structure compact.

In one preferred form of the present invention, the vehicle control device further comprises: a timer that starts counting when or after the voice recognition unit recognizes the voice signal; and a control cancel means that does not output the control command if a preset time of said timer has elapsed without said permitting action taken by the driver.

When the voice recognition unit recognizes an incorrect signal, the incorrectly-recognized signal is canceled without requiring the driver's operation, since the control command is not outputted if a preset time has elapsed without the permitting action taken by the driver.

In another preferred form of the present invention, the control permission unit receives a signal of the permitting action taken by the driver from a permission switch provided on a steering wheel.

This enables safely operation because the driver can operate the permission switch without removing the hand from the steering wheel.

In yet another preferred form of the present invention, the onboard control system is a shift control system of an automatic transmission.

In the case of the conventional automatic transmission, it is necessary to operate the shift lever when selecting the driver's intended shift position. According to this form, however, a shift position can be selected by a voice signal. Thus, the driver can safely perform a shifting operation without removing the hand from the steering wheel.

### BRIEF DESCRIPTION OF THE DRAWINGS

The nature of this invention, as well as other objects and advantages thereof, will be explained in the following with reference to the accompanying drawings, in which like reference characters designate the same or similar parts throughout the figures and wherein:
Fig. 1 is a block diagram showing the entire structure of a vehicle control device according to an embodiment of the present invention;
Fig. 2 is a block diagram showing the structure of a principal unit in a vehicle equipped with a continuously variable transmission according to the embodiment of the present invention;
Fig. 3 is a flow chart showing the process of controlling a shift by a voice according to the embodiment of the present invention; and
Fig. 4 is a flow chart showing the process of controlling an onboard control system by a voice according to another embodiment of the present invention.

### DETAILED DESCRIPTION OF THE PREFERRED EMBODIMENTS

Preferred embodiments of the present invention will be described hereinbelow with reference to the accompanying drawings.

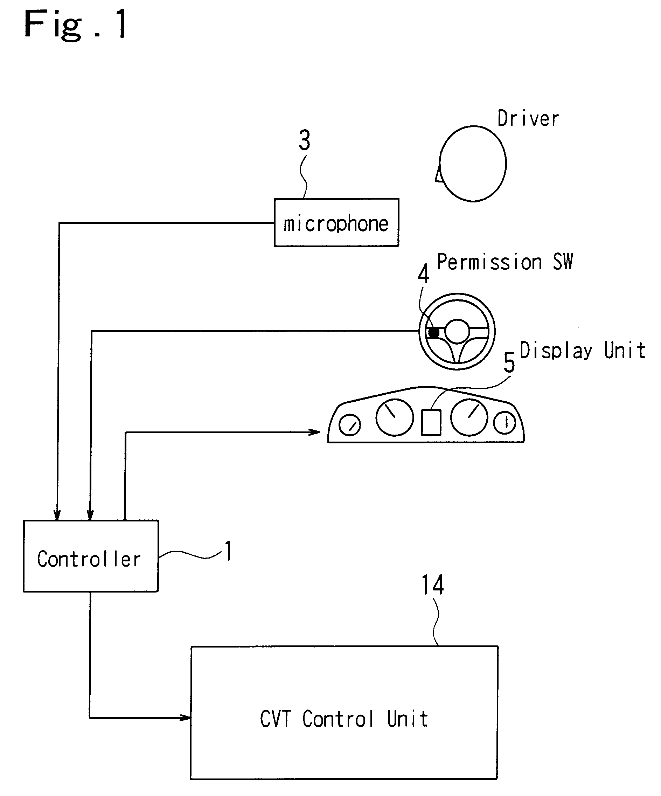

Fig. 1 is a block diagram showing the embodiment applied to a control device of a belt-type continuously variable transmission (hereinafter referred to as CVT) .

The vehicle control device has a microphone 3, a push-button type permission switch 4 provided on a steering wheel and a display unit 5 provided on a meter panel, which are all connected to a controller 1.

The controller 1 comprises a voice recognition unit and a control permission unit therein and is connected to a CVT control unit 14.

The microphone 3 inputs a driver's voice. In a controller 1 the voice recognition unit recognizes the voice inputted from the microphone 3. A control command recognized by the voice recognition unit is outputted from the controller 1 to the display unit 5. The display unit 5 displays the present operating condition of the belt-type CVT and also displays the next action by lighting. The permission switch 4 on the steering wheel is operated by the driver who permits the action displayed on the display unit 5. The CVT control unit 14 controls a shifting operation according to a control command, which is outputted from the controller 1 responding to the operation of the permission switch 4.

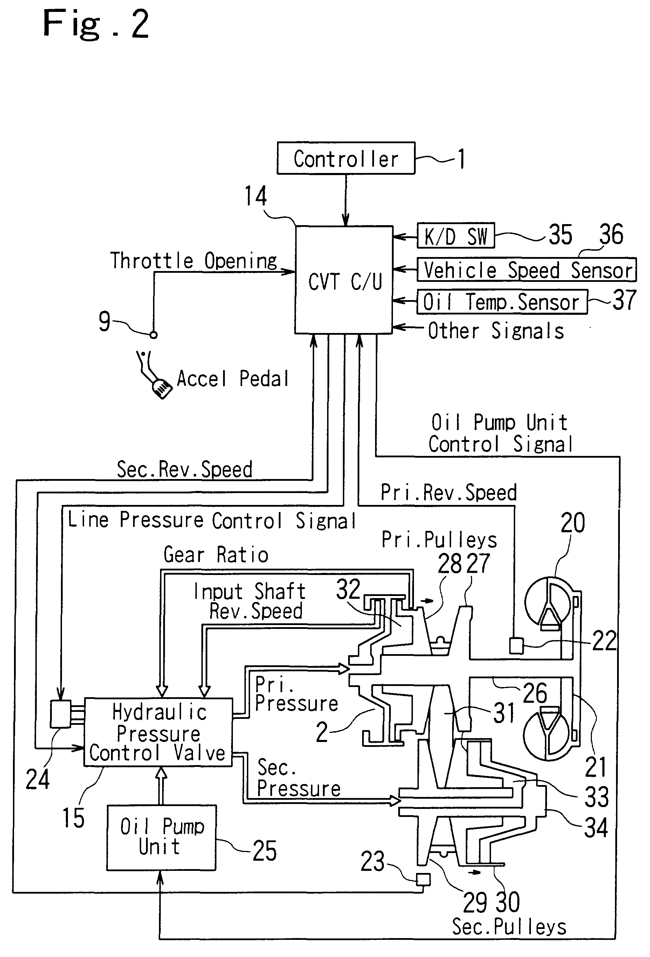

Fig. 2 is a diagram showing a control system of the belt-type CVT.

An output shaft of an engine (not shown) connects to the torque converter 20 serving as a rotation transmission mechanism. In the torque converter 20, the lockup clutch 21 is provided which directly connects the engine with the belt-type CVT 2 when engaged.

An output side of the torque converter 20 connects to a transmission input shaft 26. Primary pulleys 27, 28 of the belt-type CVT 2 are provided at the end of the input shaft 26.

The belt-type CVT 2 has the primary pulleys 27, 28; secondary pulleys 29, 30, and a belt 31 that transmits the torques from the primary pulleys 27, 28 to the secondary pulleys 29, 30. The pulley 28 is capable of moving along the input shaft 26 due to primary hydraulic pressure applied to a primary pulley cylinder chamber 32, and the pulley 30 is capable of moving along the output shaft 34 due to the secondary hydraulic pressure applied to a secondary pulley cylinder chamber 33. A drive gear (not shown) is secured to the output shaft 34, and drives a drive shaft that reaches driving wheels via a pinion provided on an idler shaft, a final gear and a differential gear unit.

A rotational ratio between the primary pulleys 27, 28 and the secondary pulleys 29, 30, i.e. a gear ratio can be varied by moving the pulleys 28, 30 axially thereby changing the radius of a contact area between the primary and secondary pulleys and the belt 31. In this controlling operation, the widths of V-shaped grooves on the primary pulleys 27, 28 and the secondary pulleys 29, 30 are changed by producing the primary hydraulic pressure and the secondary hydraulic pressure in the hydraulic pressure control valve 15 according to an instruction from the CVT control unit 14 and then supplying these hydraulic pressures to the primary pulley cylinder chamber 32 and the secondary pulley cylinder chamber 33.

The CVT control unit 14 receives a throttle opening signal from the throttle opening sensor 9, a switch signal from a kickdown switch 35, a vehicle speed signal from a vehicle speed sensor 36, a transmission oil temperature signal from an oil temperature sensor 37, a primary revolutionary speed signal from the primary revolutionary speed sensor 22, a secondary revolutionary speed signal from the secondary revolutionary speed sensor 23, and other signals. The throttle opening sensor 9 detects the opening of the throttle valve which is driven by the accelerator pedal. According to these input signals, the CVT control unit 14 performs an arithmetic operation to output a line pressure control signal to the line pressure solenoid 24, output a gear ratio control signal to the hydraulic pressure control valve 15 and output an oil pump unit control signal to the oil pump unit 25.

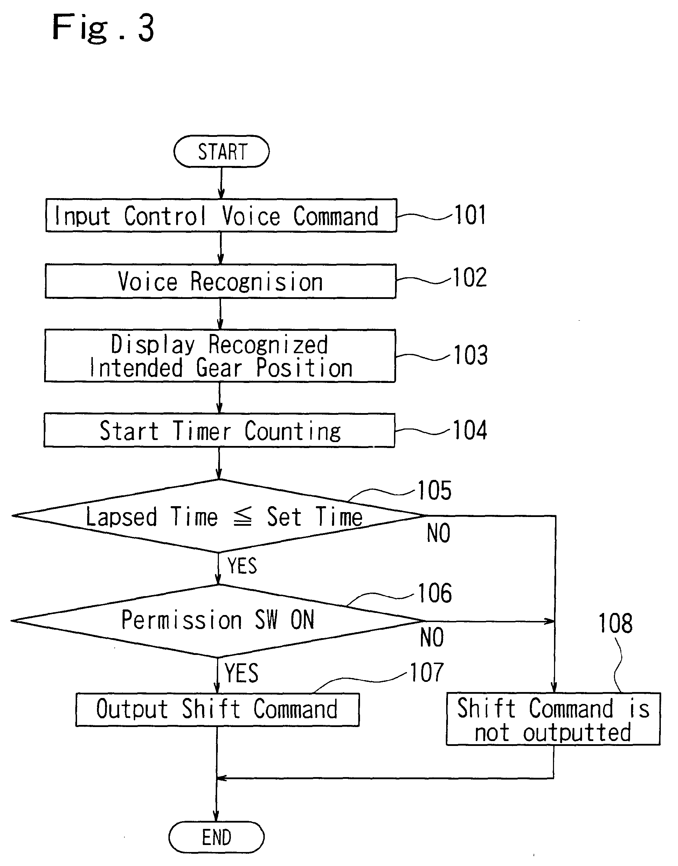

Fig. 3 is a flow chart showing the process of controlling the shifting operation of the belt-type CVT according to the embodiment. There will now be described the process of controlling the belt-type CVT by a voice with reference to the flow chart.

In a step 101, a driver's shift intention is inputted as the voice signal from the microphone to the controller 1.

In a step 102, in the controller, the input voice signal is recognized by the voice recognition unit as a control command.

In a step 103, the control command, in other words, the intended action such as a shifting gear position, recognized in the controller 1 is displayed on the display unit 5.

In a step 104, a timer starts counting.

In a step 105, the controller 1 determines whether an elapsed time is within a set-up time of the timer or not. If the determination is positive (yes), the process goes to a step 106. If the determination is negative (no), the process goes to a step 108 without outputting a shift command.

In the step 106, it is determined in the controller 1 whether the permission switch 4 is ON or OFF. If the permission switch 4 is ON, the process goes to a step 107. If the permission switch 4 is OFF, the process goes to the step 108 without outputting a shift command.

In the step 107, a shift command as the intended action is outputted to the CVT control unit 14 to carry out a shifting operation.

More specifically, when the driver inputs the shift intention to the microphone 3 by his or her voice, the recognized gear position is displayed so as to confirm whether the driver's intention is correctly recognized or not. The timer then starts counting. Thus, if the driver has no intention of shifting or if the action is falsely recognized, the display of the gear position is ignored and is automatically invalidated if the preset time of the timer has elapsed. If the permission switch 4 provided on the steering wheel is turned on the shift command is outputted to the CVT control unit 14. Accordingly, the shifting operation is carried out.

As stated above, the driver controls the shifting operation by his or her voice, and therefore, the driver does not have to remove the hands from the steering wheel during the shifting operation even if the steering wheel must be turned frequently as in the case of sport driving. Moreover, the use of permission switch 4 prevents the output of an incorrect shift command if the controller 1 falsely recognizes the action. Consequently, the shifting operation can be carried out without fail in accordance with the driver's intention.

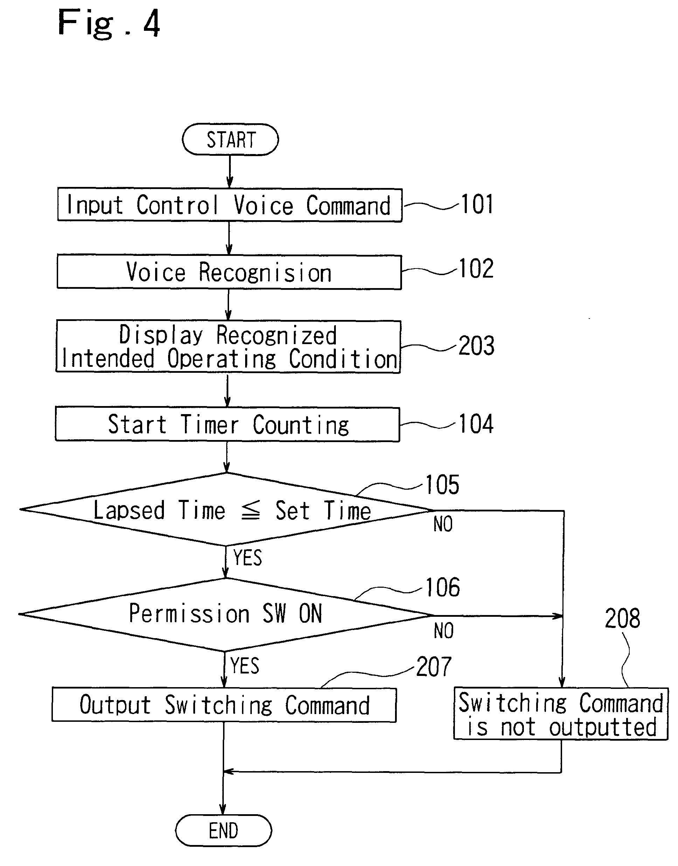

Fig. 4 is a flow chart showing the process of controlling another onboard control system by a voice.

As stated above, the present invention is applied to the shift control of the automatic transmission, but the present invention should not be restricted to this. For example, incorporating steps 203, 207 and 208, it is possible to control all the actions of the following onboard equipment by voices: a wiper, headlights, an air conditioner, an audio equipment, turn signal lamps, hazard lamps, select positions or over-drive switch of a multi-speed transmission, power seats, power windows, a room lamp, a watch, an ASCD (automatic speed control device) and so forth.

In a step 203 of the flow chart, the operating condition as the intended action recognized in the controller 1 is displayed on the display unit 5.

And, in a step 207, a command to switch the operating condition to the intended one is outputted to the subject onboard control system.

Moreover, the push-button type switch is used as the permission switch in the former embodiment, but the present invention should not be restricted to this. For example, an up-down shift type switch or a grip switch, which is turned on by gripping the steering wheel, may be used as the permission switch.

Furthermore, the permission switch is provided on the steering wheel, but a foot switch (a switch which is pressed by a foot) may be used as the permission switch.

In addition, the present invention may also be applied to control systems in barrier-free vehicles such as electric wheelchairs.

It should be understood, however, that there is no intention to limit the invention to the specific forms disclosed, but on the contrary, the invention is to cover all modifications, alternate constructions and equivalents falling within the spirit and scope of the invention as expressed in the appended claims.

## Claims

1. A vehicle control device comprising:
a microphone for inputting a driver's control voice command;
a voice recognition unit for recognizing a voice signal of the control command inputted by said microphone;
a display unit for displaying the control command recognized by said voice recognition unit at such a position as to be seen by the driver;
a control permission unit for permitting the control command to be outputted in response to a permitting action taken by the driver who confirms that what is displayed on said display unit conforms to the control command intended by the driver; and
an onboard control system for performing a controlling operation according to the control command outputted from said voice recognition unit by permission of said control permission unit.

2. A vehicle control device according to claim 1, further comprising:
a timer that starts counting when or after said voice recognition unit recognizes said voice signal; and
a control cancel means that does not output the control command if a preset time of said timer has elapsed without said permitting action taken by the driver.

3. A vehicle control device according to claim 1 or claim 2, wherein:
said control permission unit receives a signal of said permitting action taken by the driver from a permission switch provided on a steering wheel.

4. A vehicle control device according to claim 1, 2 or 3, wherein:
said onboard control system is a shift control system of an automatic transmission.

5. Control apparatus for controlling operation of a vehicle, the control apparatus comprising:
transducer means (3) for detecting a voice command of an operator of such a vehicle and outputting a signal based on the voice command; voice recognition means (1) for recognising said signal and outputting a control command signal; output means (5) for outputting the control command signal to such an operator for verification thereby; and control means (1) for controlling an operation according to said control command signal when verification is received.

6. A vehicle comprising the vehicle control device as claimed in claims 1 to 4 or the control apparatus claimed in claim 5.
